# EUROPÄISCHE PATENTSCHRIFT

(11) **EP 2 666 623 B1**
(45) Veröffentlichungstag und Bekanntmachung des Hinweises auf die Patenterteilung: **02.12.2020**
(21) Anmeldenummer: 13155189.7
(22) Anmeldetag: 14.02.2013
(51) Int. Cl.: B30B 15/06

(54) **Verfahren zur Herstellung eines Presspolsters sowie zugehöriger Elastomerfaden und zugehöriges Presspolster**
Method for producing a pressure cushion and corresponding elastomer thread and associated pressure pad
Procédé de fabrication d'un coussin de presse ainsi que fils d'élastomère correspondants et coussin de presse correspondant

(30) Priorität: 26.05.2012 DE 202012005265 U
(43) Veröffentlichungstag der Anmeldung: 27.11.2013
(73) Patentinhaber: Hueck Rheinische GmbH, 41747 Viersen (DE)
(72) Erfinder: Espe, Dr., Rolf, 44795 Bochum (DE)
(74) Vertreter: Bauer, Dirk

(56) Entgegenhaltungen:
- EP-A1- 1 033 237
- EP-A1- 1 040 910
- EP-A2- 2 347 894
- WO-A1-00/01522
- DE-U1- 20 001 177
- DE-U1- 20 115 945
- US-A- 3 775 228

## Beschreibung

### Einleitung

Die vorliegende Anmeldung betrifft ein Verfahren zur Herstellung eines Presspolsters aufweisend die folgenden Verfahrensschritte:
a) Mittels eines Extruders wird ein Elastomerwerkstoff um einen Seelenfaden herum ausgeformt.
b) Der Elastomerwerkstoff wird vernetzt, wodurch der Seelenfaden und der Elastomerwerkstoff gemeinsam einen hochtemperaturbeständigen Elastomerfaden ausbilden.
c) Eine Vielzahl von Elastomerfäden wird mit einer Vielzahl von Wärmeleitfäden in einem Webprozess zu dem Presspolster verarbeitet, wobei entweder die Elastomerfäden in Kettrichtung und die Wärmeleitfäden in Schussrichtung oder die Elastomerfäden in Schussrichtung und die Wärmeleitfäden in Kettrichtung angeordnet werden.

Ferner befasst sich die vorliegende Anmeldung mit einem Elastomerfaden, insbesondere für den Einsatz in einem Presspolster, in Form eines Kettfadens oder eines Schussfadens, wobei der Elastomerfaden von einem Seelenfaden und einem um diesen herum ausgeformten Elastomerwerkstoff gebildet ist.

Abschließend betrifft die vorliegende Anmeldung ein Presspolster für den Einsatz in Heizpressen, umfassend ein von Kettfäden und Schussfäden gebildetes Gewebe.

### Stand der Technik

Holzwerkstoffplatten wie Sperrholz-, Span-, MDF- oder HDF-Platten werden in Ein- oder Mehretagenheizpressen, die als Nieder- oder Hochdruckpressen ausgebildet sein können, mit Kunstharzfilmen beschichtet. Einetagenniederdruckpressen, die mit einem spezifischen Pressdruck bis ca. 50 kp/cm² beziehungsweise 500 N/cm² bei schneller Schließgeschwindigkeit arbeiten, werden auch "Kurztaktpressen" genannt. Derartige Kurztaktpressen werden zum Beispiel genutzt, um Fußbodenplatten auf HDF-Basis (High Density Fiberboard) mit dekorativen Melaminharzfilmen und Melaminharzoverlays zu beschichten.

Die Herstellung derartiger (Fußboden-)Platten benötigt einen gleichmäßigen Pressdruck und eine gleichmäßige und schnelle Wärmeübertragung. Um diese Anforderungen zu erfüllen, müssen die in den Heizpressen eingesetzten Presspolster, die als Puffer zwischen dem zu bearbeitenden Produkt und den Heizplatten der Heizpresse angeordnet sind, zum einen eine ausreichende Polsterwirkung aufweisen, um den Pressdruck der Heizpresse gleichmäßig auf das Produkt verteilen zu können, und zum anderen eine gute Wärmeleitfähigkeit aufweisen, um eine zügige Wärmeübertragung zwischen dem zu pressenden Produkt und der jeweiligen Heizplatte der Heizpresse zu gewährleisten.

Heute werden Presspolster eingesetzt, deren Rückstelleigenschaften hauptsächlich von darin enthaltenen Elastomerwerkstoffen gebildet sind. Wichtige Vertreter dieser Elastomerwerkstoffe sind Silikonkautschuk, Fluorsilikonkautschuk, Fluorkautschuk und auch Copolymere aus Silikon- und Fluorsilikonkautschuk. Presspolster sind in der Regel textile Produkte, wobei es eine Vielzahl unterschiedlicher Ausführungsformen gibt. In der EP 1 300 235 B1 und der DE 23 19 593 B2 wird jeweils ein Presspolster aus einem Metallgewebe beschrieben, welches anschließend zumindest teilweise mit einem Silikonkautschuk beschichtet wird, wobei auf einer Oberfläche des Presspolsters die einzelnen Metallfäden des Metallgewebes freiliegen und so für einen guten Wärmetransport zwischen dem zu pressenden Produkt und der Heizplatte der Heizpresse sorgen sollen. Ferner ist beschrieben, dass zur Steigerung der Wärmeleitfähigkeit der Silikonkautschuk mit Metallpulver angereichert ist. Derartige Zuschlagstoffe bergen jedoch den Nachteil, die Härte des Elastomerwerkstoffs zu erhöhen und sich folglich negativ auf die Rückstelleigenschaften des Presspolsters auszuwirken. Die gewünschte Funktion der Kraftverteilung des Presspolsters über das jeweilig zu pressende Produkt wird dadurch gestört.

In der EP 1 136 248 A1 wird ein Gewebepolster beschrieben, das von Kett- und Schussfäden gebildet ist, wobei die Fäden von einem Copolymer aus Silikon- und Fluorsilikonkautschuk sowie Metallfäden gebildet sind. Hierbei werden zur Steigerung der Wärmeleitfähigkeit der Fäden auch metallische Zuschlagstoffe aufgeführt.

Ferner ist aus der EP 0 735 949 A1 ein Presspolster bekannt, dessen Kett- und/oder Schussfäden ein Silikonelastomer aufweisen, wobei das Silikonelastomer in dem Gewebe des Presspolsters sowohl als Vollfaden als auch mit Silikon ummanteltem Metalldraht enthalten sein kann.

Des Weiteren ist aus der EP 0 713 762 A2 ein Polster für Hoch- und Niederdruckpressen bekannt, dass aus verschiedenen Garnmaterialien besteht.

Das Dokument EP-A-2347894 offenbart ein Verfahren zur Herstellung eines Presspolsters gemaß dem Oberbegriff des Anspruchs 1, sowie ein Elastomerfaden gemaß dem Oberbegriff des Anspruchs 5. Bei allen bekannten Presspolster werden deren Wärmeleitfähigkeitseigenschaften durch Zugaben von metallischen oder nichtmetallischen Zuschlagsstoffen in die verwendeten Elastomerwerkstoffe oder durch eine Erhöhung des Anteils der metallischen Kettfäden verbessert. Beide Maßnahmen führen dazu, dass die elastischen Eigenschaften, die hauptsächlich für die Polsterwirkung des Presspolsters verantwortlich sind, negativ beeinflusst werden. Speziell bei der Beschichtung von Fußbodenplatten ist eine gute Polsterwirkung jedoch zwingend nötig, um eine gute Qualität bei geringem Ausschuss zu erreichen, wobei die Wärmeleitfähigkeit des Presspolsters hoch sein soll, um den Energieeinsatz bei der Produktion möglichst gering zu halten.

### Aufgabe

Der Erfindung liegt daher die Aufgabe zugrunde, ein Presspolster vorzuschlagen, dass den heutigen Anforderungen in Bezug auf schnelle Wärmeleitfähigkeit und hohe Rückstelleigenschaften gerecht wird.

### Lösung

Die zugrunde liegende Aufgabe wird ausgehend von einem Verfahren nach Anspruch 1 durch die folgenden Verfahrensschritte gelöst:
d) Vor der Vernetzung des Elastomerwerkstoffs wird mindestens ein Kontaktfaden in eine Oberfläche des Elastomerwerkstoffs eingedrückt, wobei ein Teil einer Oberfläche des Kontaktfadens frei bleibt.
e) Mittels der Vernetzung wird der mindestens eine Kontaktfaden in dem Elastomerwerkstoff verankert.

Die Kontaktfäden sind vorteilhafterweise von einem Material gebildet, welches eine hohe Wärmeleitfähigkeit aufweist. Somit sind beispielsweise metallische Kontaktfäden besonders vorteilhaft. Die erfindungsgemäße Kombination eines eingedrückten und gleichwohl frei liegenden Kontaktfadens bewirkt den besonderen Vorteil, dass der jeweilige Kontaktfaden besonders gut sowohl mit der Heizplatte des Heizpresse auf der einen Seite als auch mit einem Pressblech auf der anderen Seite in einen Wärme leitenden Kontakt gebracht werden kann. Außerdem gewährt die "äußere" Anordnung der Kontaktfäden einen besonders guten Kontakt der einzelnen Elastomerfäden untereinander, so dass ein Wärmetransport durch ein gebildetes Presspolster besonders gut stattfinden kann, da die Wärme mittels der aneinander stoßenden Kontaktfäden in Dickenrichtung besonders gut von einem zum jeweils benachbarten Elastomerfaden transportiert werden kann. Eine Polsterwirkung des Elastomerfadens selbst wird hierdurch gar nicht oder zumindest nicht nennenswert eingeschränkt. Insbesondere wird dem Elastomerwerkstoff, in den die Kontaktfäden eingedrückt werden, kein Zuschlagsstoff zugesetzt, wie es gemäß dem Stand der Technik üblich ist. Eine Reduktion der elastischen Eigenschaften des Elastomerfadens tritt demzufolge nicht auf. Folglich verbindet ein Presspolster, welches zumindest teilweise von Elastomerfäden gebildet ist, die mittels des erfindungsgemäßen Verfahrens hergestellt sind, die Eigenschaften einer guten Polsterwirkung sowie einer guten Wärmeleitfähigkeit.

Als Elastomerwerkstoffe haben sich bei einem hohen Temperaturbereich von bis zu 250°C, Silikonkautschuk, Fluorkautschuk und Copolymere aus Silikonkautschuk und Fluorsilikonkautschuk bewährt. Weitere Elastomerwerkstoffe, die in diesem Temperaturbereich temperaturbeständig sind, sind ohne Weiteres denkbar.

Die Herstellung der Elastomerfäden geschieht in einem Extruder, wobei die Elastomerfäden mit einem Seelenfaden zur Stabilisierung ausgerüstet werden. Die Seelenfäden können aus verschiedenartigen Metallfäden oder anderen hochtemperaturbeständigen Werkstoffen bestehen. Im Extruder wird der Elastomerwerkstoff um den Seelenfaden herum ausgeformt, der anschließend zur Vernetzung in eine Trockenzone überführt wird. Die Trockenzone kann aus Infrarotstrahlung, Heißluft oder überhitztem Salzbad bestehen. Das erfindungsgemäße Verfahren ist dann besonders vorteilhaft, wenn die Kontaktfäden, die oberflächlich in den Elastomerwerkstoff eingebettet werden, durch die Extruderdüse geführt werden. Die Kontaktfäden drücken sich dabei in den Elastomerwerkstoff, wobei ein wesentlicher Teil einer Oberfläche des jeweiligen Kontaktfadens frei bleibt. Nach der Vernetzung des Elastomerwerkstoffs bleiben die Kontaktfäden fest in selbigem verankert. Dies ist wichtig für die Verarbeitung der Elastomerfäden in einem Webprozess, da Kontaktfäden, die nach der Vernetzung auf den Elastomerwerkstoff aufgebracht werden in den Webstühlen zu Verhakungen und Stillständen führen können.

In einem besonders vorteilhaften Verfahren wird ein jeweiliger Kontaktfaden axial in Längsrichtung des Seelenfadens beziehungsweise des späteren Elastomerfadens in die Oberfläche des Elastomerwerkstoffs eingebracht. Bei einer solchen Anordnung werden typischerweise mehrere Kontaktfäden um einen Umfang des Elastomerwerkstoffs verteilt in dessen Oberfläche eingebracht, wobei eine Anordnung von drei bis sieben Kontaktfäden besonders zu bevorzugen ist. Die Anzahl und Dicke der Kontaktfäden können den jeweiligen Anforderungen angepasst und die Wärmeleitfähigkeit somit reguliert werden. Dabei ist es wichtig, dass eine Polsterwirkung der Elastomerfäden nicht negativ beeinflusst wird, wie dies gemäß dem Stand der Technik der Fall ist. Insoweit ist ein unbeschränkter Einsatz der beschriebenen Kontaktfäden nicht möglich.

Neben einer axialen Führung der Kontaktfäden in dem jeweiligen Elastomerfaden, können die Fäden auch wendel- oder spiralförmig in Längsrichtung des Seelenfadens angelegt werden. Mit dieser Anordnung kann die Wärmeleitfähigkeit noch individueller gestaltet werden, insbesondere ergibt sich durch die Wendelform die Möglichkeit, die in den Kontaktfäden transportierte Wärme von einer Seite eines Querschnitts des Elastomerfadens auf dessen "andere Seite" zu führen.

Die beschriebenen Elastomerfäden bilden später nach der Gewebeherstellung mit den metallischen Kett- oder Schussfäden des restlichen Gewebes einen Kontaktschluss. Dadurch kann die in der Heizpresse eingebrachte Wärme direkt durch das Presspolster von der Heizplatte der Heizpresse zu dem metallischen Pressblech fließen. Das Pressblech als Oberflächengeber hat somit einen direkten Kontakt zum Beschichtungsmaterial des Holzwerkstoffes.

Weiterhin hat sich auch herausgestellt, dass durch eine Erhöhung des Anteils der metallischen Kett- beziehungsweise Schussfäden (je nachdem, in welcher Funktion die metallischen Fäden eingesetzt werden) - wie in der Patenliteratur aufgeführt - zwar die Wärmeleitfähigkeit des jeweiligen Presspolsters gesteigert werden kann, die Polsterwirkung desselben aber erheblich gemindert wird.

Ausgehend von einem Elastomerfaden der eingangs beschriebenen Art wird die zugrunde liegende Aufgabe erfindungsgemäß durch mindestens einen Elastomerfaden gelöst, der die Merkmale des Anspruchs 5 aufweist. Ein Elastomerfaden, der mindestens einen derartigen Kontaktfaden aufweist, ist im Hinblick auf die Wärmeleitfähigkeit eines mittels derartiger Elastomerfäden hergestellter Presspolster besonders vorteilhaft, wobei eine Polsterwirkung der einzelnen Elastomerfäden und folglich gleichermaßen des gesamten Presspolsters nicht negativ beeinflusst werden. Ein solcher erfindungsgemäßer Elastomerfaden ist mittels des erfindungsgemäßen Verfahrens besonders einfach herstellbar.

In einer besonders vorteilhaften Ausgestaltung des erfindungsgemäßen Elastomerfadens ist dessen Seelenfaden von einem hochtemperaturbeständigen Werkstoff, insbesondere von Metall, gebildet. Ein solcher Elastomerfaden ist für einen Einsatz in Ein- oder Mehretagenheizpressen, die mit Temperaturen von mehr als 250 °C arbeiten, besonders gut geeignet.

Ausgehend von einem Presspolster der eingangs beschriebenen Art wird die zugrunde liegende Aufgabe ferner dadurch gelöst, das mindestens ein Kettfaden und/oder mindestens ein Schussfaden von einem Elastomerfaden gemäß Anspruch 5 gebildet ist. Die Vorzüge eines derartigen Presspolsters sind vorstehend bereits erläutert.

### Ausführungsbeispiele

Die vorstehend beschriebene Erfindung wird nachfolgend anhand von Ausführungsbeispielen, die in den Figuren dargestellt sind, näher erläutert.

Es zeigt:
- Fig. 1:: Einen erfindungsgemäßen Elastomerfaden mit axial in Längsrichtung des Seelenfadens verlaufenden Kontaktfäden,
- Fig. 2:: Einen weiteren erfindungsgemäßen Elastomerfaden mit wendelförmig in Längsrichtung des Seelenfadens verlaufenden Kontaktfäden,
- Fig. 3:: Einen Querschnitt durch den Elastomerfaden gemäß Figur 1 und
- Fig. 4:: Ein Detail des Querschnitts gemäß Figur 3.

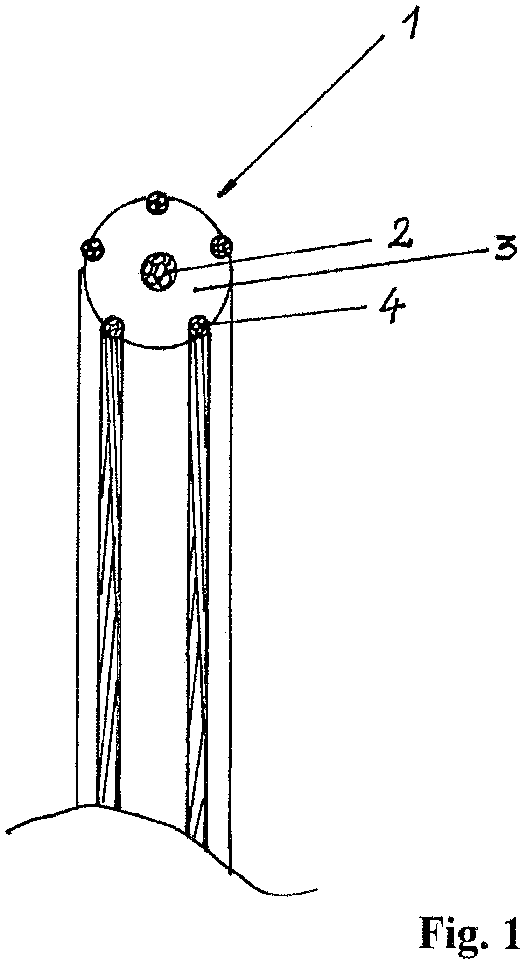

Ein erstes Ausführungsbeispiel, das in Figur 1 dargestellt ist, zeigt einen Elastomerfaden 1 umfassend einen Seelenfaden 2, der von sieben verlitzten Metalleinzelfäden gebildet ist, sowie einen von einem Elastomerwerkstoff gebildeten Elastomerkörper 3. In eine Oberfläche des Elastomerkörpers 3 sind axial in Längsrichtung des Seelenfadens 2 ausgerichtete Kontaktfäden 4 eingebettet, wobei eine Oberfläche der Kontaktfäden 4 frei bleibt, das heißt die Kontaktfäden 4 nicht vollständig in den Elastomerwerkstoff des Elastomerkörpers 3 "eingedrückt" sind. Die Kontaktfäden 4 sind hier von fünf Einzelfäden in der Qualität Messing Ms 30 in 0,20 mm Dicke gebildet.

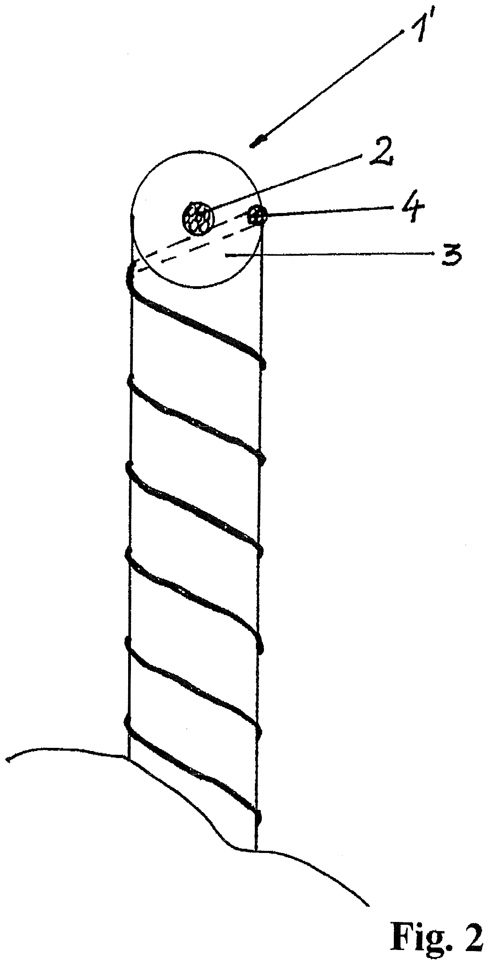

In Figur 2 ist eine alternative Ausführungsform dargestellt, die einen Elastomerfaden 1' zeigt, der ebenso wie der Elastomerfaden 1 gemäß Figur 1 mit einem Seelenfaden 2 ausgestattet ist. Im Unterschied zum Elastomerfaden 1 weist der Elastomerfaden 1' jedoch lediglich einen einzigen Kontaktfaden 4' auf, der wendel- beziehungsweise spiralförmig in Längsrichtung des Seelenfadens 2 an dem Elastomerkörper 3 angeordnet ist.

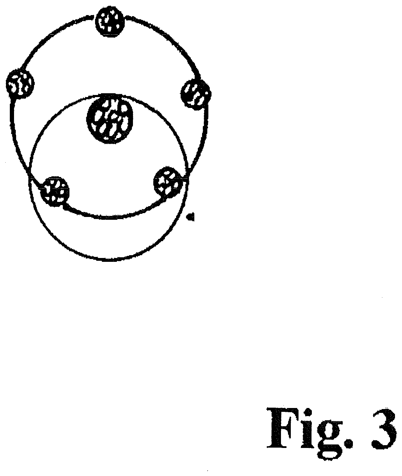

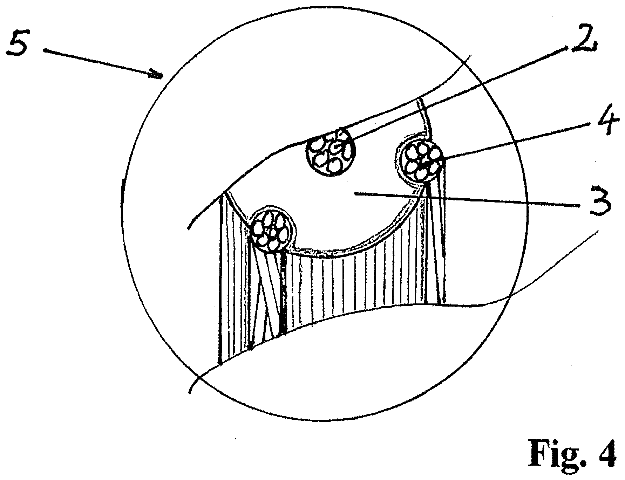

Figur 3 zeigt einen Querschnitt des Elastomerfadens 1 gemäß Figur 1, wobei ein Ausschnitt 5 des gezeigten Querschnitts in Figur 4 noch einmal vergrößert dargestellt ist. Figur 4 zeigt den Elastomerkörper 3, den Seelenfaden 2 und die eingebetteten Kontaktfäden 4, wobei deutlich wird, dass sowohl der Seelenfaden 2 als auch die Kontaktfäden 4 im gezeigten Beispiel von verlitzten Metalleinzelfäden gebildet sind.

Die beschriebenen Elastomerfäden 1, 1' können beispielsweise in einem Presspolster eingesetzt werden, welches als Tuchbindung ausgestaltet ist, wobei Kettfäden des Gewebes aus verlitzten Messingeinzelfäden 7 x 0,20 mm der Messingqualität Ms 30 bestehen und eine Kettfadendichte von 800 Fäden pro 100 cm Webbreite aufweisen.

Als Schussfäden werden erfindungsgemäße Elastomerfäden aus einem Copolymer von Silikon- und Fluorsilikonkautschuk mit einem Seelenfaden aus verlitzten Kupferfäden 8 x 0,20 mm empfohlen. Ein Fadendurchmesser des gesamten Elastomerfadens beträgt 1,6 mm bei einer Schussdichte von 450 Schuss pro 100 cm Weblänge.

### Bezugszeichenliste

- 1, 1': Elastomerfaden
- 2: Seelenfaden
- 3: Elastomerkörper
- 4: Kontaktfaden
- 5: Ausschnitt

## Patentansprüche

1. Verfahren zur Herstellung eines Presspolsters aufweisend die folgenden Verfahrensschritte:
a) Mittels eines Extruders wird ein Elastomerwerkstoff um einen Seelenfaden (2) herum ausgeformt.
b) Der Elastomerwerkstoff wird vernetzt, wodurch der Seelenfaden (2) und der Elastomerwerkstoff gemeinsam einen hochtemperaturbeständigen Elastomerfaden (1, 1') ausbilden.
c) Eine Vielzahl von Elastomerfäden (1, 1') wird mit einer Vielzahl von Wärmeleitfäden in einem Webprozess zu dem Presspolster verarbeitet, wobei entweder die Elastomerfäden (1, 1') in Kettrichtung und die Wärmeleitfäden in Schussrichtung oder die Elastomerfäden (1, 1') in Schussrichtung und die Wärmeleitfäden in Kettrichtung angeordnet werden,
**gekennzeichnet durch** die folgenden Verfahrensschritte:
d) Vor der Vernetzung des Elastomerwerkstoffs wird mindestens ein Kontaktfaden (4) in eine Oberfläche des Elastomerwerkstoffs eingedrückt, wobei ein Teil einer Oberfläche des Kontaktfadens (4) frei bleibt.
e) Mittels der Vernetzung wird der mindestens eine Kontaktfaden (4) in dem Elastomerwerkstoff verankert.

2. Verfahren nach Anspruch 1, **dadurch gekennzeichnet, dass** der mindestens eine Kontaktfaden durch eine Extruderdüse des Extruders geführt und dabei in den Elastomerwerkstoff eindrückt wird.

3. Verfahren nach Anspruch 1 oder 2, **dadurch gekennzeichnet, dass** der mindestens eine Kontaktfaden (4) axial in Längsrichtung des Seelenfadens (2) in die Oberfläche des Elastomerwerkstoffs eingebettet wird.

4. Verfahren nach Anspruch 1 oder 2, **dadurch gekennzeichnet, dass** der mindestens eine Kontaktfaden (4) wendelförmig oder spiralförmig in Längsrichtung des Seelenfadens (2) in die Oberfläche des Elastomerwerkstoffs eingebettet wird.

5. Elastomerfaden (1, 1'), insbesondere für den Einsatz in einem Presspolster, in Form eines Kettfadens oder eines Schussfadens, wobei der Elastomerfaden (1, 1') von einem Seelenfaden (2) und einem um diesen herum mittels eines Extruders ausgeformten Elastomerwerkstoff gebildet ist, **gekennzeichnet durch** mindestens einen Kontaktfaden (4), der durch die Extruderdüse in eine Oberfläche des Elastomerwerkstoffs eingedrückt ist, so dass er nach der Vernetzung des Elastomerwerkstoffes axial in Längsrichtung des Seelenfadens (2) oder wendelbeziehungsweise spiralförmig in Längsrichtung des Seelenfadens (2) fest in dem Elastomerwerkstoff eingebettet und verankert ist, wobei ein Teil einer Oberfläche des Kontaktfadens (4) frei bleibt.

6. Elastomerfaden (1, 1') nach Anspruch 5, **dadurch gekennzeichnet, dass** der Seelenfaden (2) von einem hochtemperaturbeständigen Werkstoff, insbesondere von Metall, gebildet ist.

7. Elastomerfaden (1, 1') nach Anspruch 5 oder 6, **dadurch gekennzeichnet, dass** der mindestens eine Kontaktfaden (4) von einem Metallfaden gebildet ist.

8. Elastomerfaden (1, 1') nach Anspruch 5 oder 6, **dadurch gekennzeichnet, dass** der mindestens eine Kontaktfaden (4) von einem nichtmetallischen Werkstoff gebildet ist.

9. Presspolster für den Einsatz in Heizpressen, umfassend ein von Kettfäden und Schussfäden gebildetes Gewebe, **dadurch gekennzeichnet, dass** mindestens ein Kettfaden und/oder mindestens ein Schussfaden von einem Elastomerfaden (1, 1') gemäß Anspruch 5 gebildet ist.

## Claims

1. Method for the production of a press pad having the following method steps:
a) By means of an extruder an elastomeric material is formed around a core thread (2).
b) The elastomeric material is cross-linked, whereby the core thread (2) and the elastomeric material together form a high temperature-resistant elastomeric thread (1, 1').
c) A multiplicity of elastomeric threads (1, 1') are processed with a multiplicity of heat-conducting threads in a weaving process to form the press pad, wherein either the elastomeric threads (1, 1') are arranged in the warp direction and the heat-conducting threads are arranged in the weft direction, or the elastomeric threads (1, 1') are arranged in the weft direction and the heat-conducting threads are arranged in the warp direction,
**characterised by**, the following method steps:
d) Before the cross-linking of the elastomeric material, at least one contact thread (4) is pressed into a surface of the elastomeric material, wherein a part of a surface of the contact thread (4) remains free.
e) By means of the cross-linking, the at least one contact thread (4) is anchored in the elastomeric material.

2. Method according to Claim 1, **characterised in that**, the at least one contact thread is led through an extrusion nozzle of the extruder and pressed into the elastomeric material.

3. Method according to Claim 1 or 2, **characterised in that**, the at least one contact thread (4) is embedded axially, in the longitudinal direction of the core thread (2), into the surface of the elastomeric material.

4. Method according to Claim 1 or 2, **characterised in that**, the at least one contact thread (4) is embedded helically or spirally, in the longitudinal direction of the core thread (2), into the surface of the elastomeric material.

5. Elastomeric thread (1, 1'), in particular for use in a press pad, in the form of a warp thread or a weft thread, wherein the elastomeric thread (1, 1') is formed by a core thread (2) and an elastomeric material that is formed around it by means of an extruder, **characterised by**, cross-linking of the elastomeric material axially, in the longitudinal direction of the core thread (2), or helically or spirally in the longitudinal direction of the core thread (2), is firmly embedded and anchored in the elastomeric material, wherein a part of a surface of the contact thread (4) remains free.

6. Elastomeric thread (1, 1') according to Claim 5, **characterised in that**, the core thread (2) is formed by a high temperature-resistant material, in particular metal.

7. Elastomeric thread (1, 1') according to Claim 5 or 6, **characterised in that**, the at least one contact thread (4) is formed from a metal thread.

8. Elastomeric thread (1, 1') according to Claim 5 or 6, **characterised in that**, the at least one contact thread (4) is formed from a non-metallic material.

9. Press pad for use in heated presses, comprising a fabric formed from warp threads and weft threads, **characterised in that**, at least one warp thread, and/or at least one weft thread, is formed from an elastomeric thread (1, 1') according to Claim 5.

## Revendications

1. Procédé de fabrication d'un coussinet de pressage, présentant les étapes opératoires suivantes :
a) Au moyen d'une extrudeuse, un matériau élastomère est déformé autour d'un fil d'âme (2).
b) Le matériau élastomère est réticulé, ce qui a pour effet que le fil d'âme (2) et le matériau élastomère constituent ensemble un fil élastomère résistant aux hautes températures (1, 1').
c) Une multitude de fils élastomère (1, 1') sont transformés en coussinet de pressage avec une multitude de fils conducteurs thermiques dans un procédé de trame, soit les fils élastomère (1, 1') étant disposés dans le sens de la chaîne et les fils conducteurs thermiques dans le sens de la trame, soit les fils élastomère (1, 1') étant disposés dans le sens de la trame et les fils conducteurs thermiques dans le sens de la chaîne,
**caractérisé par** les étapes opératoires suivantes :
d) Avant la réticulation du matériau élastomère, au moins un fil de contact (4) est enfoncé dans une surface du matériau élastomère, une partie d'une surface du fil de contact (4) restant libre.
e) Au moyen de la réticulation, l'au moins un fil de contact (4) est ancré dans le matériau élastomère.

2. Procédé selon la revendication 1, **caractérisé en ce que** l'au moins un fil de contact est guidé à travers une buse d'extrusion de l'extrudeuse et est alors enfoncé dans le matériau élastomère.

3. Procédé selon la revendication 1 ou 2, **caractérisé en ce que** l'au moins un fil de contact (4) est encastré axialement dans le sens longitudinal du fil d'âme (2) dans la surface du matériau élastomère.

4. Procédé selon la revendication 1 ou 2, **caractérisé en ce que** l'au moins un fil de contact (4) est encastré en forme de méandres en forme de spirale dans le sens longitudinal du fil d'âme (2) dans la surface du matériau élastomère.

5. Fil élastomère (1, 1'), destiné en particulier à une utilisation dans un coussinet de pressage, sous la forme d'un fil de chaîne ou d'un fil de trame, le fil élastomère (1, 1') étant constitué d'un fil d'âme (2) et d'un matériau élastomère déformé autour de celui-ci au moyen d'une extrudeuse, **caractérisée par** au moins un fil de contact (4) qui est enfoncé à travers la buse extrudeuse dans une surface du matériau élastomère, de sorte que, après la réticulation du matériau élastomère, il est encastré et ancré axialement dans le sens longitudinal du fil d'âme (2) ou en forme de méandres ou de spirale dans le sens longitudinal du fil d'âme (2) fixement dans le matériau élastomère, une partie d'une surface du fil de contact (4) restant libre.

6. Fil élastomère (1, 1') selon la revendication 5, **caractérisé en ce que** le fil d'âme (2) est constitué d'un matériau résistant aux hautes températures, en particulier de métal.

7. Fil élastomère (1, 1') selon la revendication 5 ou 6, **caractérisé en ce que** l'au moins un fil de contact (4) est composé d'un fil métallique.

8. Fil élastomère (1, 1') selon la revendication 5 ou 6, **caractérisé en ce que** l'au moins un fil de contact (4) est composé d'un matériau non métallique.

9. Coussinet de pressage destiné à une utilisation dans des presses chauffantes, comprenant un tissu composé de fils de chaîne et de fils de trame, **caractérisé en ce qu'**au moins un fil de chaîne et/ou au moins un fil de trame est constitué d'un fil élastomère (1, 1') selon la revendication 5.
